# EUROPEAN PATENT APPLICATION

(11) **EP 3 517 792 A1**
(43) Date of publication of application: **31.07.2019**
(21) Application number: 19153735.6
(22) Date of filing: 25.01.2019
(51) Int. Cl.: F16B 5/02, B60R 13/08, F16B 29/00

(54) **COMPRESSION LIMITING FASTENING SYSTEM**

(30) Priority: 26.01.2018 US 201862622185 P; 14.08.2018 US 201862718417 P; 24.01.2019 US 201916256829
(71) Applicant: Illinois Tool Works, Inc., Glenview, Illinois 60025 (US)
(72) Inventor: OWENS II., Ronald C., Glenview, Illinois, 60025 (US); CLARK, Chad M., Glenview, Illinois, 60025 (US)
(74) Representative: Trinks, Ole

(57) **Abstract**

A fastening system (210) is configured to securely couple a fastened component (18) to a mating structure using a fastener with a shaft. The fastening system includes a compression limiting sleeve (212) and a spring element (214). The compression limiting sleeve has an axial hub (224), a base (222), and a sleeve outer wall. The axial hub extends perpendicularly from the base and is configured to receive the shaft of the fastener. The sleeve outer wall extends from the base. The spring element has a central portion (248) and a spring element outer wall (250). The central portion includes a central opening (252) and at least one coupling feature (263). The central opening is configured to receive the shaft of the fastener. The at least one coupling feature is configured to engage the axial hub of the compression limiting device.

## Description

### CROSS-REFERENCE TO RELATED APPLICATIONS

The present application is based on, claims priority to, and incorporates by reference in their entireties U.S. Provisional Application No. 62/622,185, filed on January 26, 2018, and entitled "Compression Limiting Fastening System" and U.S. Provisional Application No. 62/718,417, filed on August 14, 2018, and entitled "Compression Limiting Fastening System."

### FIELD OF THE INVENTION

The present invention relates to connection assemblies and, more particularly, to fastening systems that are configured to receive an elongated fastening element through a component so as to apply a relatively light load to the component while the fastening element establishes a secure connection with an underlying mating structure.

### BACKGROUND

A threaded member may be connected in place relative to a surface of a panel or other such component by extending an elongated male fastening element (for example, a threaded bolt) through a hole in the component and engaging a mating structure at a far side of the component. As an example, the mating structure may be a rotatable nut or a component such as a panel or the like with a female opening for receipt and engagement with the fastening element. By tightening down the fastening element, the component and the underlying mating structure are drawn together so as to be held in a secure relation to one another. While such an arrangement provides a secure connection, the component may experience a substantial level of compression as pressure is applied by the fastening element. In severe situations, such compression may cause structural or cosmetic damage to the fastened component.

For example, in some instances, a heat shield or a similar component may be coupled to an automotive engine or other heat-generating element. The vibrations from the engine, as well as differing thermal expansion coefficients, may result in the fastened component being gradually damaged. This damage may cause a loosening of the connection between the component and the engine over time.

Accordingly, supporting sleeve inserts may be used to act as compression limiters at the interior of the opening in the component. Such sleeve inserts may be useful in preventing over compression of the fastened component. A sleeve insert also may be used to maintain a gap between the fastened component and the underlying mating structure. While sleeve inserts may provide a useful function, such elements do not provide stabilizing load across the upper surface of the component during connection. An independent cylindrical sleeve also typically requires a separate installation step at the time of connection.

### SUMMARY

In one aspect, a fastening system configured to securely couple a fastened component to a mating structure is provided. The fastening system comprises a fastener, a compression limiting sleeve, and a spring element. The fastener has a shaft. The compression limiting sleeve has an axial hub, a base, and a sleeve outer wall. The axial hub extends perpendicularly from the base and is configured to receive the shaft of the fastener. The sleeve outer wall extends from the base. The spring element has a central portion and a spring element outer wall. The central portion includes a central opening configured to receive the shaft of the fastener. The spring element outer wall extends from the central portion and includes a first annular portion and a second annular portion. The first annular portion is connected to the second annular portion. The first annular portion extends at a first angle with respect to a central axis of the spring element. The second annular portion extends at a second angle with respect to the central axis of the spring element. The first angle is different than the second angle.

In some aspects, at least one of the compression limiting sleeve and the spring element may include at least one opening. The at least one opening may define a circular shape. The at least one opening may define an elongated slot. The elongated slot may be an open-ended slot. The sleeve outer wall and the spring element outer wall may each be configured to act as a spring when compressed. When the fastening system is assembled, a distal end of the axial hub may extend proximate to the central portion of the spring element. The spring element may further comprise a lip radially extending from the spring element outer wall and defining an arcuate shape.

In another aspect, a fastening system configured to securely couple a fastened component to a mating structure using a fastener having a shaft is provided. The fastening system comprises a compression limiting sleeve and a spring element. The compression limiting sleeve has an axial hub, a base, and a sleeve outer wall. The axial hub extends perpendicularly from the base and is configured to receive the shaft of the fastener. The sleeve outer wall extends from the base. The spring element has a central portion and a spring element outer wall. The central portion includes a central opening and at least one coupling feature. The central opening is configured to receive the shaft of the fastener. The at least one coupling feature is configured to engage the axial hub of the compression limiting sleeve. When the at least one coupling feature of the spring element engages the axial hub of the compression limiting sleeve, the compression limiting sleeve is removably coupled to the spring element.

In some aspects, the axial hub may define a hollow cylindrical shape and include a crimped distal end defining a larger outer diameter than a remainder of the axial hub. The at least one coupling feature may be configured to engage the crimped distal end of the axial hub. The at least one coupling feature may be at least one protrusion extending radially-inward from an inner surface of the central portion of the spring element, into the central opening of the spring element. The at least one coupling feature may be at least one engagement arm having a retention lip that is sized to engage the crimped distal end of the axial hub. At least one of the compression limiting sleeve and the spring element may include at least one opening. The at least one opening may define an open-ended slot. The spring element may further comprise a lip radially extending from the spring element outer wall and defining an arcuate shape.

In another aspect, a method for assembling a fastening system onto a fastened component having an opening is provided. The fastening system may be configured to securely couple the fastened component to a mating structure and have a compression limiting sleeve and a spring element. The compression limiting sleeve may have an axial hub with an engagement portion. The spring element may have a central opening and at least one coupling feature. The method comprises inserting the axial hub of the compression limiting sleeve through the opening of the fastened component. The method further comprises placing the spring element over the axial hub on the fastened component. The method further comprises inserting the axial hub into the central opening of the spring element. While the axial hub is inserted into the central opening of the spring element, the engagement portion of the axial hub engages the at least one coupling feature of the spring element, thereby removably coupling the compression limiting sleeve to the spring element.

In some aspects, the engagement portion of the axial hub may be a crimped distal end of the axial hub. The at least one coupling feature may be at least one protrusion extending into the central opening that is sized to engage the engagement portion of the axial hub. The at least one coupling feature may be at least one engagement arm including a retention lip that is sized to engage the engagement portion of the axial hub.

Other features and advantages of the invention will become apparent to those skilled in the art upon review of the following detailed description, claims and drawings in which like numerals are used to designate like features.

### BRIEF DESCRIPTION OF THE DRAWINGS

The invention will be better understood and features, aspects and advantages other than those set forth above will become apparent when consideration is given to the following detailed description thereof. Such detailed description makes reference to the following drawings.
- FIG. 1: is a front elevational view of a fastening system, in accordance with aspects of the present invention, shown assembled onto a fastened component;
- FIG. 2: is a top plan view of a compression limiting sleeve of the fastening system of FIG. 1;
- FIG. 3: is a cross-sectional view of the compression limiting sleeve of FIG. 2, taken along line 3-3;
- FIG. 4: is a top plan view of a spring element of the fastening system of FIG. 1;
- FIG. 5: is a cross-sectional view of the spring element of FIG. 4, taken along line 5-5;
- FIG. 6: is a top perspective view of another spring element for use with the fastening system of FIG. 1;
- FIG. 7: is a cross-sectional view of the fastening system of FIG. 1, shown assembled onto the fastened component;
- FIG. 8: is a cross-sectional view of the fastening system of FIG. 1, shown with the fastening system coupling the fastened component to a mating structure;
- FIG. 9: is a top perspective view of another spring element for use with the fastening system of FIG. 1;
- FIG. 10: is a cross-sectional view of the spring element of FIG. 9, taken along line 10-10;
- FIG. 11: is a cross-sectional view of the fastening system of FIG. 1, shown with the spring element of FIG. 9;
- FIG. 12: is a cross-sectional view of another fastening system, in accordance with aspects of the present disclosure, shown assembled onto a fastened component;
- FIG. 13: is a top plan view of a compression limiting sleeve of the fastening system of FIG. 12;
- FIG. 14: is a cross-sectional view of the compression limiting sleeve of FIG. 13, taken along line 14-14;
- FIG. 15: is a top plan view of a spring element of the fastening system of FIG. 12;
- FIG. 16: is a cross-sectional view of the spring element of FIG. 15, taken along line 16-16;
- FIG. 17: is a cross-sectional view of the fastening system of FIG. 12, shown with another spring element;
- FIG. 18: is a top perspective view of the fastening system of FIG. 17; and
- FIG. 19: is a top perspective view of another spring element for use with the fastening system of FIG. 12.

### DETAILED DESCRIPTION

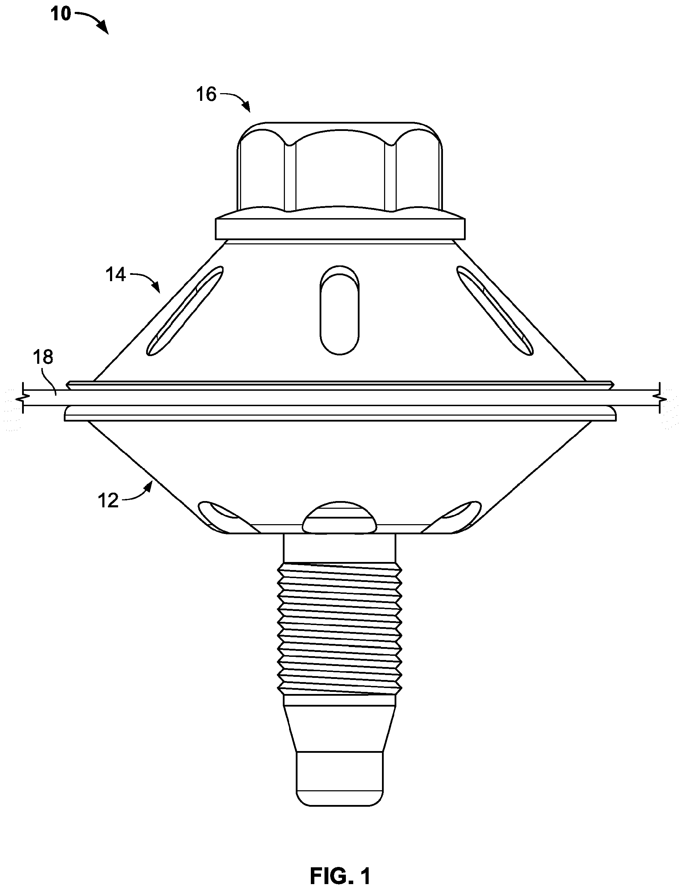

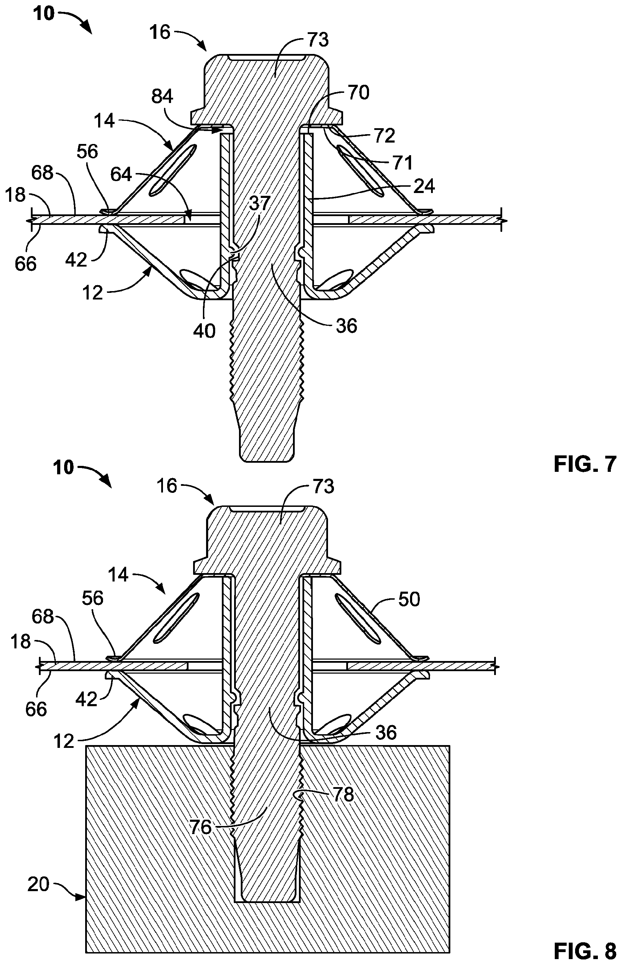

Referring now to FIG. 1, an exemplary fastening system 10 is illustrated. As shown, the fastening system 10 includes a compression limiting sleeve 12, a spring element 14, and a fastener 16. In some instances, the fastening system 10 may be used to fasten a fastened component 18 to a mating structure 20 (shown in FIG. 8) in an automotive setting. For example, in some instances the fastening system 10 may be used to fasten a heat shield to a heat generating automotive engine component such as a manifold, an engine block, or any other desired component. In some other instances, the fastening system 10 may be used to couple other suitable components to other types of mating structures.

As will be described in detail below, the fastening system 10 may be used to provide a secure fastening between the fastened component 18 and the mating structure 20, while simultaneously ensuring that the fastened component 18 is stabilized relative to the mating structure 20 and preventing an over-compression of the fastened component 18.

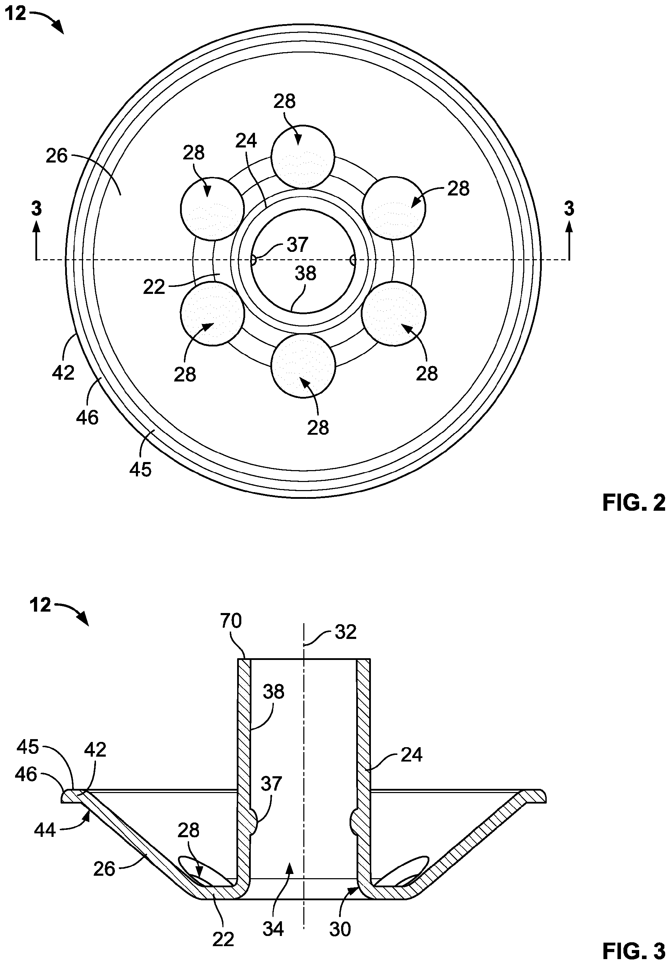

Referring now to FIGS. 2 and 3, the sleeve 12 comprises a base 22, an axial hub 24, an outer wall 26, and a plurality of openings 28. The base 22 defines a substantially flat, annular shape surrounding a proximal end 30 of the axial hub 24. The axial hub 24 extends substantially perpendicularly from the base 22 along a central axis 32 of the sleeve 12. The axial hub 24 defines a hollow cylindrical shape having a central axial passageway 34. The central axial passageway 34 is sized to receive a shaft 36 of the fastener 16, as shown in FIGS. 7 and 8.

Turning again to FIGS. 2 and 3, in some instances the axial hub 24 may further include a coupling feature 37 extending radially inward from an inner surface 38 of the axial hub 24. For example, the coupling feature 37 may be a detent or other type of radially-extending protrusion that may extend partially or fully around the circumference of the axial hub 24. The coupling feature 37 may be configured to removably engage a corresponding coupling recess 40 disposed on the shaft 36 of the fastener 16, thereby removably coupling the sleeve 12 to the fastener 16 prior to use, as also shown in FIGS. 7 and 8.

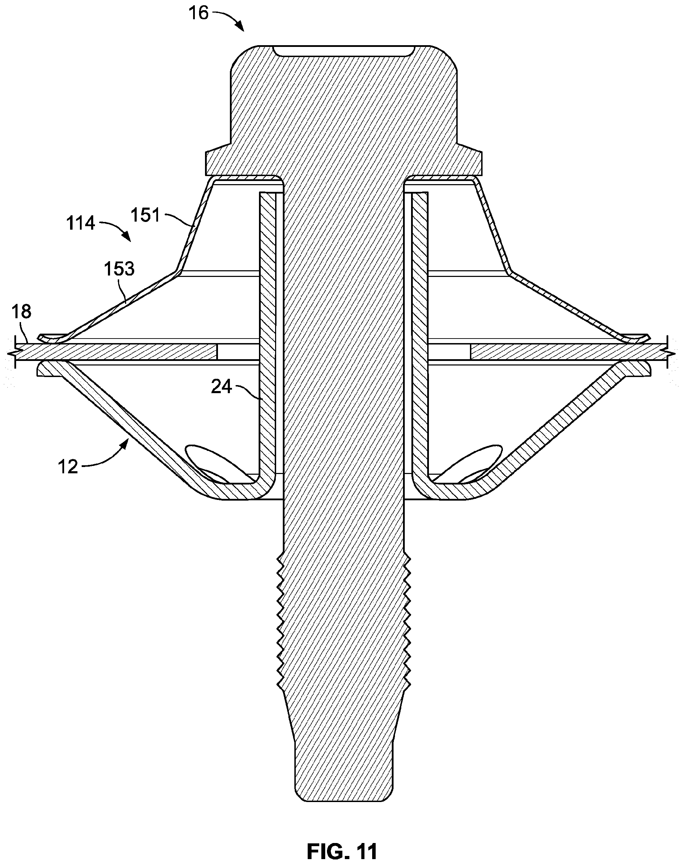

Alternatively, in some instances, the axial hub 24 may be devoid of any protrusions on the inner surface 38, such that the axial hub 24 has a constant diameter throughout the axial length of the axial hub 24, as shown in FIG. 11. Accordingly, in these instances, the fastener 16 may not include the coupling recess 40, as also shown in FIG. 11.

With reference again to FIGS. 2 and 3, the outer wall 26 extends at an angle from an outer periphery of the base 22. Specifically, the outer wall 26 extends both radially outward and axially, in the same axial direction as the axial hub 24, away from the periphery of the base 22. As such, the outer wall 26 defines a generally annular bowl shape surrounding the base 22. The outer wall 26 further includes a lip 42 extending radially outward from a distal end 44 of the outer wall 26. The lip 42 defines a generally flat, annular shape surrounding the outer wall 26. The lip 42 includes an upper surface 45 and a rounded outer edge 46. The upper surface 45 is configured to contact the fastened component 18 when the fastening assembly 10 is coupled thereto. The rounded outer edge 46 is disposed on an outer periphery of the upper surface 45 and is configured to prevent the sleeve 12 from inadvertently deforming the fastened component 18 during use, as will be described below.

The plurality of openings 28 are disposed circumferentially around the sleeve 12, surrounding the axial hub 24. Each opening 28 extends axially through the sleeve 12 through a portion of the base 22 and a portion of the outer wall 26. The openings 28 are configured to allow for foreign materials (e.g., spray, debris, moisture, etc.) to pass out of the fastening system 10 and/or evaporate. As such, the openings 28 may prevent or reduce a potential of galvanic corrosion during use.

Further, as will be described below, the outer wall 26 may act as a spring when it is compressed. As such, the openings 28 may reduce an effective spring constant of the outer wall 26, thereby reducing the corresponding spring force that the outer wall 26 is configured to impart on the fastened component 18 during use.

In the illustrated non-limiting example, each of the openings 28 defines a substantially circular shape. However, in other examples, the openings 28 may alternatively define other shapes, such as, for example, radially-extending slots, semi-annular slots extending circumferentially around a portion of the sleeve 12, or any other suitable shape. Further, in the illustrated non-limiting example, there are six evenly-spaced openings. In other examples, there may be more or less than six openings that may be evenly-spaced or unevenly-spaced, as desired for a given set of operating conditions.

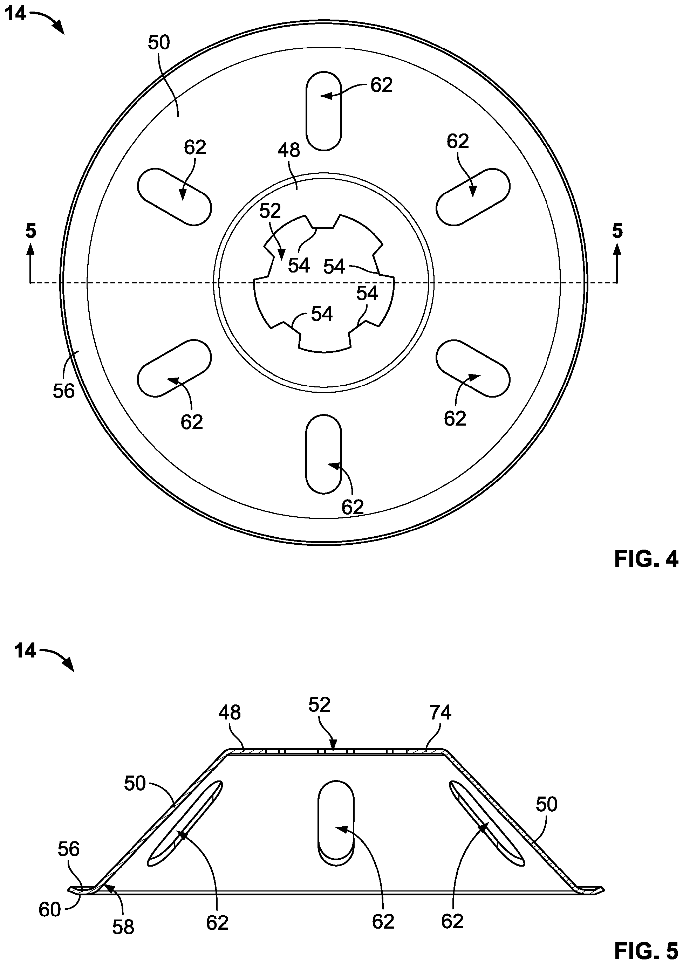

Referring now to FIGS. 4 and 5, the spring element 14 defines a generally dome-shaped structure having a central portion 48 and an outer wall 50. The central portion 48 defines a generally annular shape and includes a central opening 52. The central opening 52 may be sized to receive the shaft 36 of the fastener 16. As illustrated, a plurality of protrusions 54 may extend radially inward from the central portion 48, into the central opening 52. The protrusions 54 may be included to ensure a secure fit between the central opening 52 and the shaft 36 of the fastener 16 during use.

The outer wall 50 extends at an angle from an outer periphery of the central portion 48. Specifically, the outer wall 50 extends both radially outward and axially away from the periphery of the central portion 48. As such, the outer wall 50 defines a generally frustoconical shape surrounding the central portion 48. The outer wall 50 includes a lip 56 extending radially outward from a distal end 58 of the outer wall 50. The lip 56 defines an annular shape surrounding the outer wall 50. The lip 56 further defines an arcuate shape having a convex surface 60 configured to contact the fastened component 18 during use. The arcuate shape of the lip 56, and specifically the convex surface 60, prevents and/or reduces inadvertent deformation of the fastened component 18 by the spring element 14 during use.

The outer wall 50 further includes a plurality of openings 62 spaced evenly around the outer wall 50. Each of the openings 62 defines an elongated slot extending radially along a portion of the outer wall 50. Similar to the openings 28, the openings 62 are configured to allow for foreign materials (e.g., spray, debris, moisture, etc.) to pass out of the fastening system 10 and/or evaporate, thereby preventing or reducing the potential for galvanic corrosion during use.

It will be appreciated that, because the outer walls 26, 50 each include corresponding openings 28, 62, foreign materials may be allowed to pass out of the fastening system 10 regardless of the orientation of the fastening system 10.

Further, the outer wall 50 may similarly act like a spring when it is compressed. As such, the openings 62 may similarly reduce an effective spring constant of the outer wall 50, thereby reducing the corresponding spring force that the outer wall 50 is configured to impart on the fastened component 18 during use.

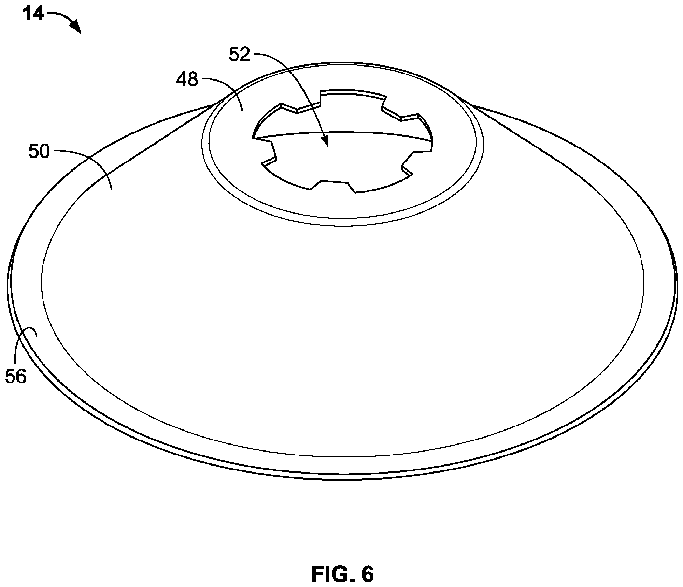

In the illustrated non-limiting example, each of the openings 62 defines an elongated slot. In other examples, the openings 62 may alternatively define other shapes, such as, for example, circular holes, semi-annular slots extending circumferentially around a portion of the spring element 14, or any other suitable shape. Further, in the illustrated non-limiting example, there are six evenly-spaced openings. In other examples, there may be more or less than six openings that may be evenly-spaced or unevenly-spaced, as desired for a given set of operating conditions. Further still, in some examples, the spring element 14 may not include any openings, as shown in FIG. 6.

In some instances, both the sleeve 12 and the spring element 14 may comprise a metal material. For example, in some instances, both the sleeve 12 and the spring element 14 may comprise 300 series stainless steel. Stainless steel may be used to further reduce or eliminate the risk of galvanic corrosion during use. In some instances, the spring element 14 may be made of other suitable metallic or non-metallic materials, as desired for a given application.

Now that the structure of the fastening assembly 10 has been described above, a method of assembly will be described below. It will be appreciated that the following method of assembly is provided as an example, and is in no way meant to be limiting.

Referring now to FIG. 7, when assembling the fastening assembly 10, the axial hub 24 of the sleeve 12 may first be inserted through an opening 64 of the fastened component 18, and may be fed through the opening 64 until the lip 42 of the sleeve 12 comes into contact with a lower surface 66 of the fastened component 18. Then, the spring element 14 may be placed on an upper surface 68 of the fastened component 18, such that the lip 56 of the spring element 14 is in contact with the upper surface 68 and the dome shape of the spring element 14 covers the portion of the axial hub 24 extending through the opening 64. As illustrated in FIG. 7, when the spring element 14 is placed over the axial hub 24, a distal end 70 of the axial hub 24 extends to a location proximate a lower surface 71 of the central portion 48. Thus, the axial hub 24 is configured to robustly retain the shaft 36 of the fastener 16 in the axial direction during use.

With the sleeve 12 and spring element 14 in place over the opening 64 of the fastened component 18, the shaft 36 of the fastener 16 may be inserted through the central opening 52 of the spring element 14 and through the axial hub 24 of the sleeve 12. As the fastener 16 is fed through the axial hub 24 of the sleeve 12, a lower surface 72 of a head 73 of the fastener 16 eventually contacts an upper surface 74 of the central portion 48 of the spring element 14 (shown in FIG. 5), thereby impeding further insertion.

In some instances, when the axial hub 24 includes the coupling feature 37 and the shaft 36 includes the coupling recess 40, as the shaft 36 of the fastener 16 is fed through the axial hub 24 of the sleeve 12, the coupling feature 37 may removably engage the coupling recess 40 of the shaft 36. As such, the fastener 16 may be removably coupled within the axial hub 24, and the sleeve 12, the spring element 14, the fastener 16, and the fastened component 18 may all be retained in engagement with each other.

It will be appreciated that the fastening system 10, including the sleeve 12, the spring element 14, and the fastener 16, may be assembled apart from the fastened component 18, in a similar manner as described above, to allow for convenient shipping or transporting of the fastening system 10 prior to use.

Now that the structure and method of assembly of the fastening system 10 have been described above, a method of use will be described below. As with the method of assembly described above, it will be appreciated that the following method of use is provided as an example, and is in no way meant to be limiting.

With reference now to FIG. 8, during use, the fastening assembly 10 may first be coupled to or assembled onto the fastened component 18, as described above. With the fastening assembly 10 arranged on the fastened component 18, a threaded portion 76 of the shaft 36 of the fastener 16 may be screwed into a corresponding threaded aperture 78 of the mating structure 20.

As the threaded portion 76 of the shaft 36 is screwed into the threaded aperture 78 of the mating structure 20, the head 73 of the fastener 16 contacts the upper surface 74 of the central portion 48. The head 73 then presses the spring element 14 against the fastened component 18, which, in turn, presses the sleeve 12 against the mating structure 20. Specifically, as the head 73 advances toward the mating structure 20, the outer wall 50 of the spring element 14 is axially compressed between the head 73 of the fastener 16 and the upper surface 68 of the fastened component 18. Similarly, the outer wall 26 of the sleeve 12 is axially compressed between the lower surface 66 of the fastened component 18 and the mating structure 20.

As the outer walls 26, 50 of the sleeve 12 and the spring element 14 are axially compressed, the outer walls 26, 50 each undergo a slight elastic deformation, resulting in spring-like counterforces being applied by the outer walls 26, 50 onto the head 73, the fastened component 18, and the mating structure 20. As such, as the fastening assembly 10 is threadably coupled to the mating structure 20 by the fastener 16, the fastened component 18 is compressively engaged between the lip 42 of the sleeve 12 and the lip 56 of the spring element 14.

As the fastened component 18 is compressed between the lips 42, 56 of the sleeve 12 and the spring element 14, the rounded edge 46 of the lip 42 (see FIG. 3) may aid in preventing the sleeve 12 from inadvertently damaging the lower surface 66 of the fastened component 18 (see FIG. 7). Similarly, the arcuate shape of the lip 56, and more specifically the convex surface 60 (see FIG. 5), may prevent or reduce the spring element 14 from inadvertently damaging the upper surface 68 of the fastened component 18.

Turning to FIGS. 7 and 8, as the head 73 of the fastener 16 is pulled toward the mating structure 20, the lower surface 71 of the central portion 48 of the spring element 14 eventually comes into contact with the distal end 70 of the axial hub 24. Once the lower surface 71 of the central portion 48 contacts the distal end 70 of the axial hub 24, the axial hub 24 prevents the head 73 of the fastener 16 from advancing farther toward the mating structure 20.

Specifically, once the lower surface 71 of the central portion 48 contacts the distal end 70 of the axial hub 24, any resultant forces caused by accidental over-tightening of the fastener 16 are transferred through the central portion 48 of the spring element 14, through the axial hub 24, through the base 22, and into mating structure 20. As such, the compressive force applied to the fastened component 18 is limited, thereby preventing the fastened component 18 from being over-compressed and damaged by the sleeve 12 and/or the spring element 14.

As illustrated, the spring element 14 may have a significantly thinner thickness than the sleeve 12. As such, the spring element 14 may have a significantly lower spring constant than the sleeve 12, and may thus compress significantly more than the sleeve 12 during use. Accordingly, a maximum compressive force exerted on the fastened component 18 can be accurately predetermined by determining the spring constant of the spring element 14 and controlling the size of an uncompressed gap 84 (shown in FIG. 7).

As such, the fastening system 10 provides a secure fastening between the fastened component 18 and the mating structure 20, while simultaneously ensuring that the fastened component 18 is stabilized relative to the mating structure 20 and preventing over-compression or inadvertent damage to the fastened component 18.

Further, because both the outer wall 26 of the sleeve 12 and the outer wall 50 of the spring element 14 act like springs during use, the fastened component 18 is securely fastened to the mating structure 20 while simultaneously being substantially decoupled and/or protected from severe vibrations and stresses caused by differing thermal expansion coefficients between the fastened component 18 and the mating structure 20.

For example, in the instances where the fastened component 18 is a heat shield and the mating structure 20 is an engine block, engine, exhaust system, or other automotive component that vibrates or gives off heat during operation, the fastened component 18 may be decoupled and/or protected from the vibrations of the mating structure 20 or stresses caused by differing thermal expansion coefficients between the fastened component 18 and the mating structure 20.

Thus, the fastening system 10 provides an improved connection between the fastened component 18 and the mating structure 20 that is more resistant to wear and/or damage than traditional rigid mountings, thereby preventing wear-induced loosening of the connection between the fastened component 18 and the mating structure 20.

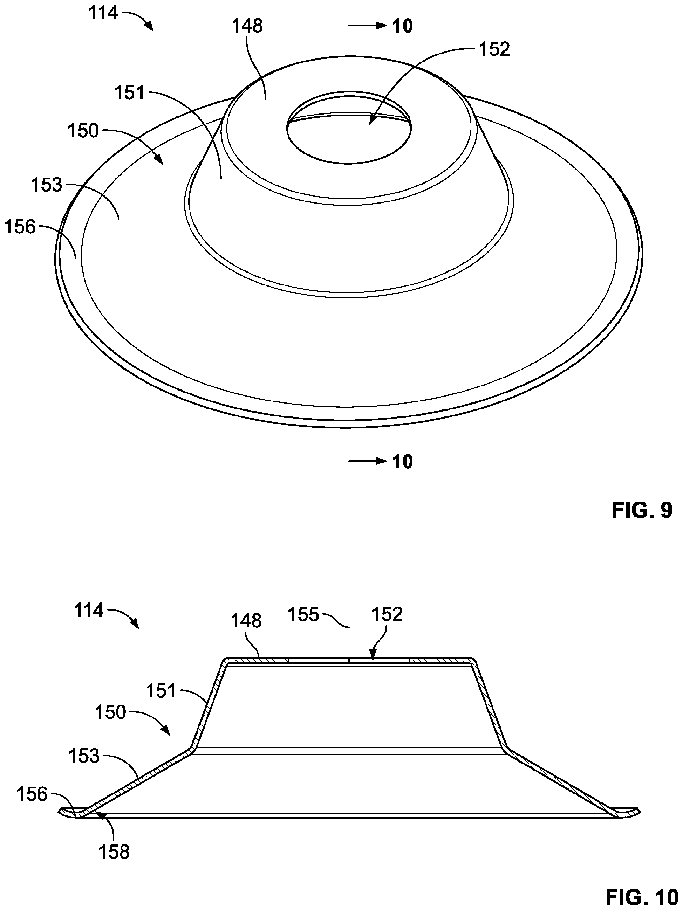

Referring now to FIGS. 9 and 10, a spring element 114 is illustrated that may be used in place of the spring element 14. The spring element 114 is substantially similar to the spring element 14. As such, similar elements will be labeled similarly in the 100 series (e.g., central portion 48 and central portion 148, central opening 52 and central opening 152, lip 56 and lip 156, etc.). Accordingly, the following description will be mainly directed toward the differences between the spring element 114 and the spring element 14.

The spring element 114 similarly includes a central portion 148 having a central opening 152. However, as illustrated, the central portion 148 does not include a plurality of protrusions extending into the central opening 152. The lack of protrusions may reduce the complexity of the manufacturing process of the spring element 114, which may allow for a decrease in the time and cost of manufacturing.

The spring element 114 also similarly includes an outer wall 150 having a lip 156 extending radially outward from a distal end 158 of the outer wall 150. However, the outer wall 150 further includes a first annular portion 151 and a second annular portion 153. As best shown in FIG. 10, the first annular portion 151 extends from the central portion 148 to the second annular portion 153 at a first angle with respect to a central axis 155 of the spring element 114. The second annular portion 153 extends from the first annular portion 151 to the lip 156 at a second angle with respect to the central axis 155 of the spring element 114.

As illustrated, the first angle is significantly smaller than the second angle. Accordingly, the first annular portion 151 extends from the central portion 148 in a significantly more axial direction compared to the second annular portion 153, which extends from the first annular portion 151 in a significantly more radial direction. The different slopes of the first annular portion 151 and the second annular portion 153 provide increased axial clearance for the axial hub 24 due to the more axially-extending first annular portion 151, as shown in FIG. 11, while simultaneously maintaining a low spring constant due to the more radially-extending second annular portion 153.

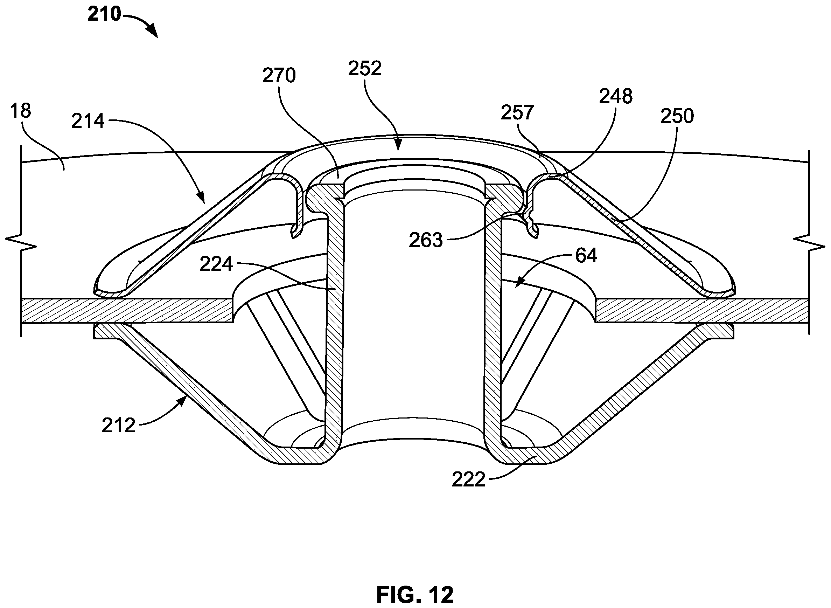

Referring now to FIG. 12, another fastening system 210 is illustrated. The fastening system 210 similarly includes a compression limiting sleeve 212 and a spring element 214, and may similarly be used to couple the fastened component 18 to a mating structure, such as the mating structure 20 described above, with a fastener, such as the fastener 16.

The fastening system 210 is substantially similar to the fastening system 10. As such, similar elements will be labeled similarly in the 200 series (e.g., sleeve 12 and sleeve 212, spring element 14 and spring element 214, axial hub 24 and axial hub 224, etc.). Accordingly, the following description will be mainly directed toward the differences between the fastening system 210 and the fastening system 10.

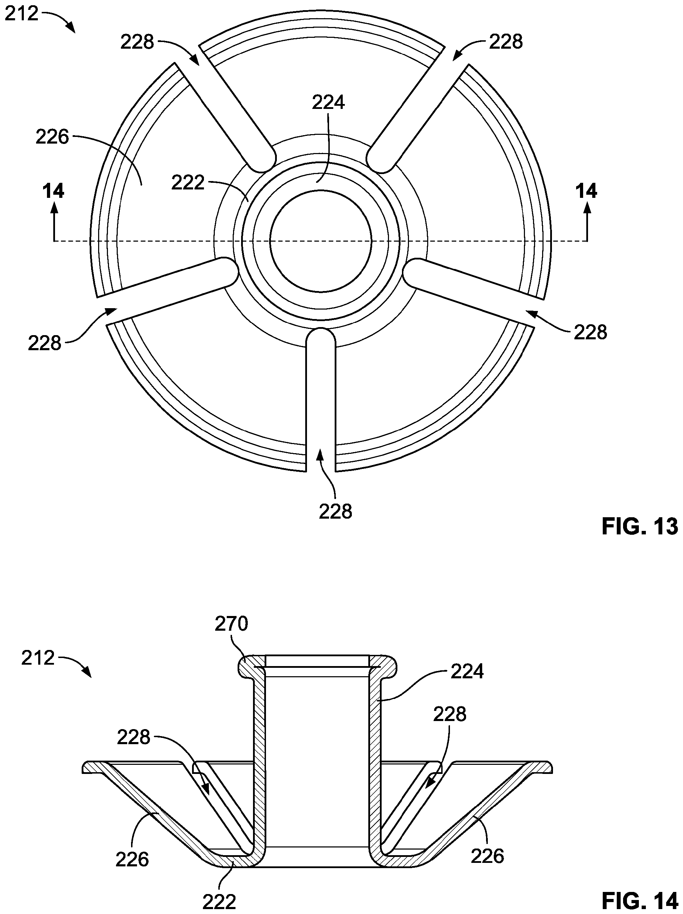

As shown in FIGS. 13 and 14, the sleeve 212 may similarly include a base 222, an axial hub 224, and an outer wall 226. However, the axial hub 224 may include an engagement portion in the form of a crimped distal end 270. The crimped distal end 270 defines a larger outer diameter than the remainder of the axial hub 224. Further, the outer wall 226 includes a plurality of radially-extending slots 228. The slots 228 each extend radially outward from the base 222 through the entire outer wall 226. As such, each slot 228 defines an open-ended slot. Similar to the openings 28, the slots 228 may allow for foreign materials to pass out of the fastening system 210 and/or evaporate, thus preventing or reducing the potential of galvanic corrosion during use. The slots 228 may also reduce the effective spring constant of the outer wall 226. Because the slots 228 are open-ended and extend radially through the entire outer wall 226, they may reduce the effective spring constant of the outer wall 226 by significantly more compared to the openings 28 of the outer wall 26.

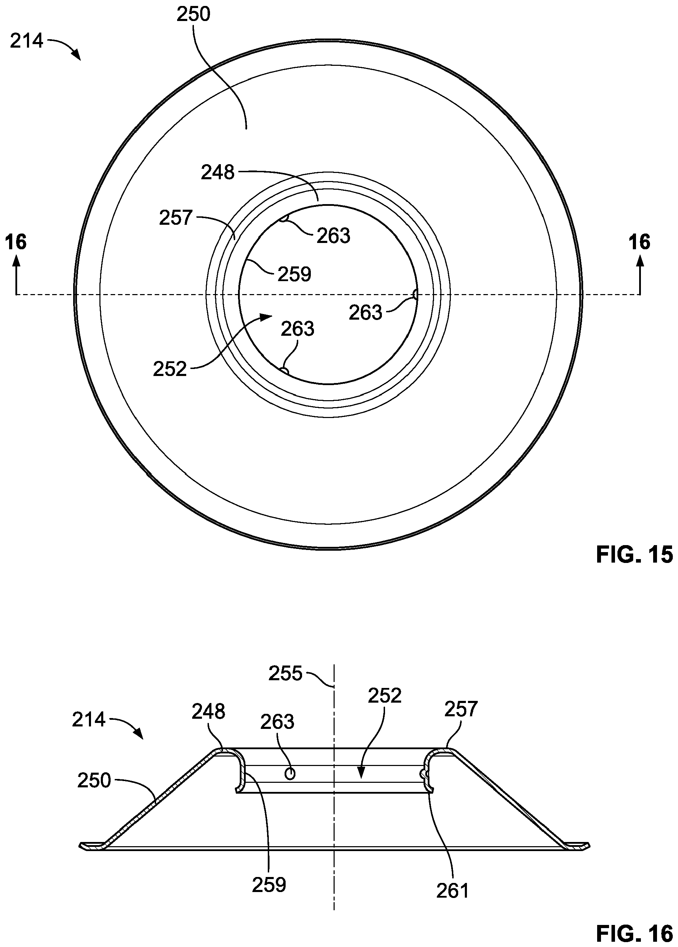

Referring now to FIGS. 15 and 16, the spring element 214 includes a central portion 248, an outer wall 250, and a central opening 252 with a central axis 255 extending therethrough. The outer wall 250 is substantially the same as the outer wall 50. However, the central portion 248 is curved such that an upper surface 257 of the central portion 248 extends radially inward, toward the central axis 255 of the spring element 214, an inner surface 259 extends axially downward generally parallel to the central axis 255, and a lower surface 261 extends radially outward, away from the central axis 255. As such, the inner surface 259 defines the central opening 252 of the spring element 214.

In some instances, the inner surface 259 may include a plurality of coupling features or protrusions 263. As illustrated, the inner surface 259 may include three, evenly-spaced protrusions 263. In some other instances, the inner surface 259 may include more or less than three protrusions 263, and the protrusions 263 may be evenly- or unevenly-spaced. The protrusions 263 may be sized to engage the crimped distal end 270 of the axial hub 224 when the fastening system 210 is assembled.

As shown in FIG. 12, during assembly, with the axial hub 224 inserted through the opening 64 of the fastened component 18, the spring element 214 may be placed over the axial hub 224, such that the axial hub 224 is inserted into the central opening 252 of the spring element 214. As the axial hub 224 is inserted into the central opening 252 of the spring element 214, the crimped distal end 270 of the axial hub 224 is sized to engage the protrusions 263 in a snap-thru manner, thereby removably coupling the axial hub 224 within the central opening 252.

With the fastening system 210 assembled onto the fastened component 18, the fastened component 18 may be coupled to a mating structure, such as the mating structure 20, using a fastener, such as the fastener 16, as described above with reference to the fastening system 10. In some instances, the head 73 of the fastener 16 may be sized to extend radially such that the lower surface 72 of the head 73 contacts the upper surface 257 of the central portion 248 as the fastener 16 is screwed into the mating structure 20. In some instances, a washer (not shown) may be used to provide sufficient width to the head 73 of the fastener 16.

As the outer wall 250 is compressed, the lower surface 72 of the head 73 eventually comes into directed contact with the crimped distal end 270 of the axial hub 224. Thus, similar to the fastening system 10, any resultant forces caused by over tightening the fastener 16 are transferred through the axial hub 224, through the base 222, and directly into the mating structure, thereby preventing over compression of the fastened component 18 between the sleeve 212 and the spring element 214.

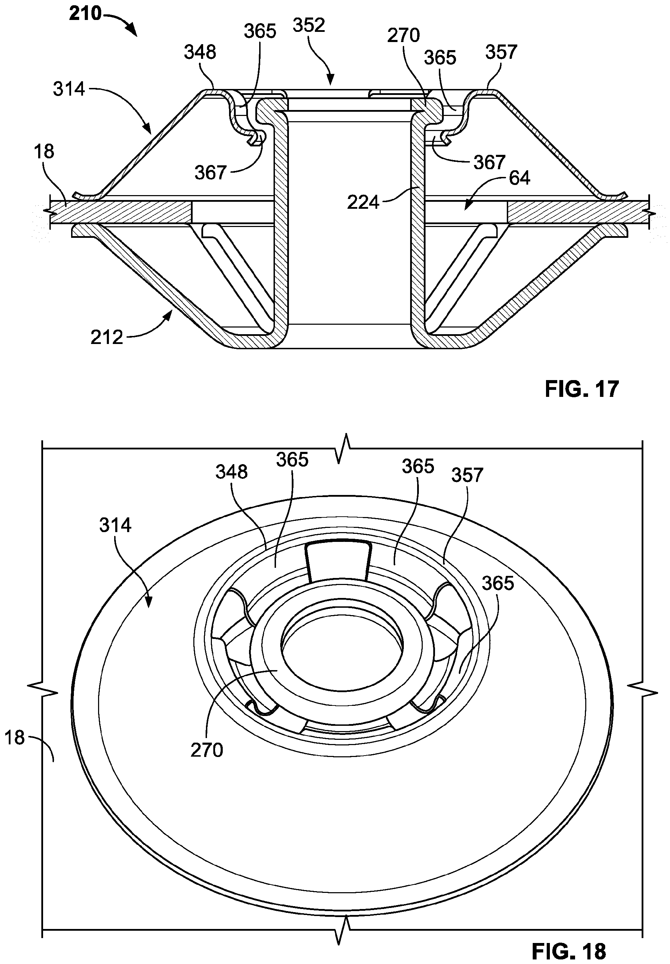

Referring now to FIGS. 17 and 18, the fastening system 210 is shown including another spring element 314. The spring element 314 is substantially similar to the spring element 214 discussed above. As such, similar elements will be labeled similarly in the 300 series, and the following description will be mainly directed toward the differences between the spring element 314 and the spring element 214.

Specifically, the spring element 314 includes a central portion 348 defining a central opening 352 and having an upper surface 357 and a plurality of coupling features or engagement arms 365. In the illustrated non-limiting example, the spring element 314 includes five, evenly-spaced engagement arms 365. In other examples, the spring element 314 may include more or less than five engagement arms 365, and the engagement arms 365 may be evenly or unevenly spaced.

Each of the plurality of engagement arms 365 includes a retention lip 367 that is sized to engage the crimped distal end 270 of the axial hub 224. As such, as shown in FIG. 17, as the axial hub 224 is inserted into the central opening 352 of the spring element 314, the crimped distal end 270 may contact the retention lips 367 of the engagement arms 365, thereby flexing the engagement arms 365 radially outward. Then, once the crimped distal end 270 passes the retention lips 367 of the engagement arms 365, the engagement arms 365 may snap back into place, thereby capturing the crimped distal end 270 and retaining the axial hub 224 within the central opening 352 of the spring element 314. As such, the crimped distal end 270 of the axial hub 224 may be snap-fit through the central opening 352 of the spring element 314, and subsequently retained therein by the retention lips 367. The axial hub 224 may then be removed from the central opening 352 of the spring element 314 by snapping the crimped distal end 270 of the axial hub 224 back through the central opening 352 of the spring element 314.

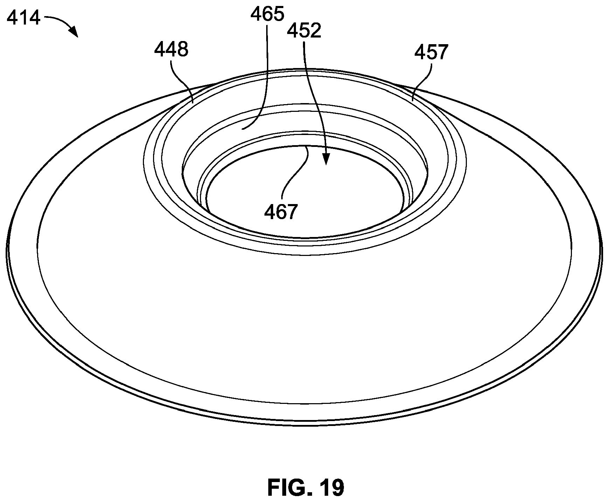

Referring now to FIG. 19, another spring element 414 is illustrated. The spring element 414 is substantially similar to the spring element 314. As such, similar elements are labeled similarly in the 400 series.

The spring element 414 includes a single coupling feature or engagement ring 465, similar to the engagement arms 365, which extends around the entire circumference of the central opening 452. The engagement ring 465 includes a corresponding retention lip 467 that is similarly sized to engage the crimped distal end 270 of the axial hub 224, in the same manner as that described above, with reference to the engagement arms 365 of the spring element 314.

As such, described herein are various fastening systems that are configured to provide a secure fastening between a fastened component and a mating structure, while simultaneously ensuring that the fastened component is stabilized relative to the mating structure and preventing over-compression or inadvertent damage to the fastened component.

Further, various fastening systems described herein may provide a coupling between a fastened component and a mating structure while simultaneously effectively decoupling and/or protecting the fastened component from both the vibrations of the mating structure and stresses caused by differing thermal expansion coefficients between the fastened component and the mating structure.

Additionally, it will be appreciated that, in some instances, various fastening systems described herein, for example the fastening system 10, may be assembled and shipped or sold as a three-piece set including a compression limiting sleeve (e.g., sleeve 12), a spring element (e.g., spring element 14 or spring element 114), and a fastener (e.g., fastener 16). In some other instances, various fastening systems described herein, for example the fastening system 210, may be assembled and shipped or sold as a two-piece set including a compression limiting sleeve (e.g., sleeve 212) and a spring element (e.g., spring element 214, spring element 314, or spring element 414).

Certain terminology is used herein for purposes of reference only, and thus is not intended to be limiting. For example, terms such as "upper", "lower", "above", and "below" refer to directions in the drawings to which reference is made. Terms such as "front", "back", "rear", "bottom" and "side", describe the orientation of portions of the component within a consistent but arbitrary frame of reference, which is made clear by reference to the text and the associated drawings describing the component under discussion. Such terminology may include the words specifically mentioned above, derivatives thereof, and words of similar import. Similarly, the terms "first", "second" and other such numerical terms referring to structures do not imply a sequence or order unless clearly indicated by the context.

Various features of the invention are set forth in the following claims. It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention.

All of the publications described herein, including patents and non-patent publications are hereby incorporated herein by reference in their entireties.

## Claims

1. A fastening system configured to securely couple a fastened component to a mating structure, the fastening system comprising:
- a fastener having a shaft;
- a compression limiting sleeve having an axial hub, a base, and a sleeve outer wall, the axial hub extending perpendicularly from the base and being configured to receive the shaft of the fastener, the sleeve outer wall extending from the base; and
- a spring element having a central portion and a spring element outer wall, the central portion including a central opening configured to receive the shaft of the fastener, the spring element outer wall extending from the central portion and including a first annular portion and a second annular portion, the first annular portion being connected to the second annular portion,
wherein the first annular portion extends at a first angle with respect to a central axis of the spring element, the second annular portion extends at a second angle with respect to the central axis of the spring element, and the first angle is different than the second angle.

2. The fastening system of claim 1,
wherein at least one of the compression limiting sleeve and the spring element includes at least one opening.

3. The fastening system of claim 2,
wherein the at least one opening defines a circular shape, or
wherein the at least one opening defines an elongated slot,
wherein the elongated slot is an open-ended slot.

4. The fastening system of one of the preceding claims,
wherein the sleeve outer wall and the spring element outer wall are each configured to act as a spring when compressed.

5. The fastening system of one of the preceding claims,
wherein, when the fastening system is assembled, a distal end of the axial hub extends proximate to the central portion of the spring element.

6. The fastening system of one of the preceding claims,
wherein the spring element further comprises a lip radially extending from the spring element outer wall and defining an arcuate shape.

7. A fastening system configured to securely couple a fastened component to a mating structure using a fastener having a shaft, the fastening system comprising:
- a compression limiting sleeve having an axial hub, a base, and a sleeve outer wall, the axial hub extending perpendicularly from the base and being configured to receive the shaft of the fastener, the sleeve outer wall extending from the base; and
- a spring element having a central portion and a spring element outer wall, the central portion including a central opening and at least one coupling feature, the central opening being configured to receive the shaft of the fastener, the at least one coupling feature being configured to engage the axial hub of the compression limiting sleeve,
wherein, when the at least one coupling feature of the spring element engages the axial hub of the compression limiting sleeve, the compression limiting sleeve is removably coupled to the spring element.

8. The fastening system of claim 7,
wherein the axial hub defines a hollow cylindrical shape and includes a crimped distal end defining a larger outer diameter than a remainder of the axial hub,
wherein the at least one coupling feature is configured to engage the crimped distal end of the axial hub.

9. The fastening system of claim 8,
wherein the at least one coupling feature is at least one protrusion extending radially-inward from an inner surface of the central portion of the spring element, into the central opening of the spring element,
wherein the at least one coupling feature is at least one engagement arm having a retention lip that is sized to engage the crimped distal end of the axial hub.

10. The fastening system of one of claims 7 to 9,
wherein at least one of the compression limiting sleeve and the spring element includes at least one opening.

11. The fastening system of claim 10,
wherein the at least one opening defines an open-ended slot.

12. The fastening system of claim one of claims 7 to 11,
wherein the spring element further comprises a lip radially extending from the spring element outer wall and defining an arcuate shape.

13. A method for assembling a fastening system onto a fastened component having an opening, the fastening system being configured to securely couple the fastened component to a mating structure and having a compression limiting sleeve and a spring element, the compression limiting sleeve having an axial hub with an engagement portion, the spring element having a central opening and at least one coupling feature, the method comprising:
- inserting the axial hub of the compression limiting sleeve through the opening of the fastened component;
- placing the spring element over the axial hub on the fastened component; and
- inserting the axial hub into the central opening of the spring element, wherein, while the axial hub is inserted into the central opening of the spring element, the engagement portion of the axial hub engages the at least one coupling feature of the spring element, thereby removably coupling the compression limiting sleeve to the spring element.

14. The method of claim 13,
wherein the engagement portion of the axial hub is a crimped distal end of the axial hub,
wherein the at least one coupling feature is at least one protrusion extending into the central opening that is sized to engage the engagement portion of the axial hub.

15. The method of claim 13 or 14,
wherein the at least one coupling feature is at least one engagement arm including a retention lip that is sized to engage the engagement portion of the axial hub.
